# EUROPEAN PATENT APPLICATION

(11) **EP 1 075 119 A2**
(43) Date of publication of application: **07.02.2001**
(21) Application number: 00115084.6
(22) Date of filing: 27.07.2000
(51) Int. Cl.: H04L 12/58, G06F 17/00

(54) **Real-time messaging system with hyperlinks to objects on an application server**

(30) Priority: 03.08.1999 US 366617
(71) Applicant: AT&T Corp., New York, NY 10013-2412 (US)
(72) Inventor: Saraswat, Vijay Anand, Morris, New Jersey 07046 (US)
(74) Representative: Modiano, Guido, Dr.-Ing.

(57) **Abstract**

The present invention enables two or more persons communicating with each other using a real-time messaging system to share objects with each other. In accordance with an embodiment of the present invention, a sender creates an object on an application server, and a reference to the object, such as a URL, is embedded in a message to the recipient. The recipient can then invoke the object by using the object reference in accessing the application server. The sender and the recipient may then communicate through the application server. The object reference can also contain authorization information tied to the identity of the recipient making it difficult for unauthorized individuals to access the object. The present invention makes it possible for a sender to give a recipient access to the functionality of the object and the ability to share, modify, update, and jointly manipulate this object.

## Description

### Field of the Invention

The present invention relates to communication systems and, in particular, to real-time messaging systems.

### Background of the Invention

There are systems that enable two persons connected to a communication network to send text messages to each other in real-time. Once a messaging session has been initiated between two terminals, either user can input messages by, for example, typing on a keyboard, and the entered message will appear on the other user's terminal. These real-time messaging systems, often referred to as "chat" or "instant messaging" systems, are growing phenomenally every week and are becoming potentially more significant than e-mail and the World Wide Web itself on the Internet. Instant messaging systems, as opposed to chat, offer among other things the additional feature of alerting a user whenever a person on a designated private list is online. Examples of such systems include America On-Line's Instant Messenger (AIM); ICQ by Mirabilis, Ltd.; Ding!; AT&T's IM Here; and others. AIM is said to carry over 225 million instant messages a day. In fact, instant messaging is said to be the most popular application on American On-Line. ICQ is reported to have 30 million subscribers world-wide.

One mechanism existing in many pre-existing instant messaging clients, such as AIM and ICQ, is the ability to send a Uniform Resource Locator (or "URL") embedded in a text message. URL's are described in detail in Berners-Lee, T., et al., "Uniform Resource Locators", RFC 1738, Network Working Group, 1994, which is incorporated herein by reference. For example, the illustrative URL "http://www.hostname.com/document1.html", identifies the document "document1.htm1" at host server "www.hostname.com" using the Hyptertext Tranfer Protocol. When the AIM or ICQ client receives such embedded information, it presents this information in the text-chat-window in the form of "clickable text". If the user clicks on this text, then a standard application (e.g. a browser such as Netscape or Internet Explorer) is launched.

Currently, however, users of conventional messaging systems who wish to share information are limited to simplistic file transfer and to the above URL mechanism, which is used primarily for identifying interesting web pages. The present invention emanates from the recognition that auxiliary computer-processible information embedded in a text message can be used, instead, to tie the dynamic space of instant messaging communication to other object creation and reference systems thus supporting a vast variety of user-created and user-initiated services.

### Summary of the Invention

The present invention enables two or more persons communicating with each other using a real-time messaging system to share objects with each other. In accordance with an embodiment of the present invention, a sender creates an object on an application server, and a reference to the object, such as a URL, is embedded in a message to the recipient. The recipient can then invoke the object by using the object reference in accessing the application server. The sender and the recipient may then communicate through the application server. The object reference can also contain authorization information tied to the identity of the recipient making it difficult for unauthorized individuals to access the object. The present invention makes it possible for a sender to give a recipient access to the functionality of the object and the ability to share, modify, update, and jointly manipulate this object.

### Brief Description of the Drawings

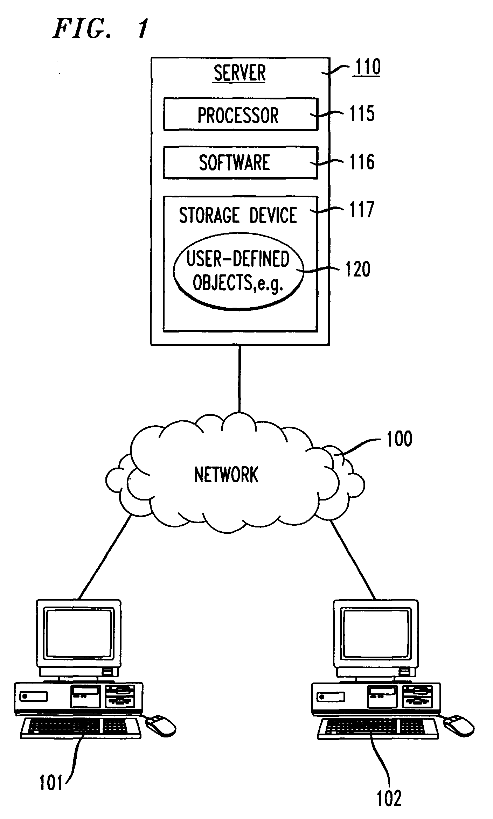

Fig. 1 is a diagram of a communication network illustrating an embodiment of the present invention.

### Detailed Description

With reference to Fig. 1, a simplified diagram of a communication network is shown illustrating an embodiment of the present invention. The user operating endpoint terminal 101 wishes to share an object with endpoint terminal 102. Terminals 101 and 102 are shown to be conventional personal computers, but may be any of a range of network-enabled communication devices, including personal data assistants, telephones, two-way pagers, etc. Terminals 101 and 102 are connected to a communication network 100, such as the Internet. It is assumed that the communication network 100 permits some form of real-time messaging between terminals 101 and 102, such as the above-mentioned instant messaging systems or chat. The exact mechanism for the messaging system does not matter for purposes of the present invention, e.g. terminals 101 and 102 can be executing any of the above conventional client-side or web-based instant messaging systems. It is preferred that the system support and recognize some form of object reference such as a URL in the text of a message.

In accordance with an embodiment of the present invention, endpoint 101 connects to application server 110. Application server 110 comprises a processor 115, a storage device 117, and software 116 (or hardware/firmware of equivalent functionality) that permits the creation of user-defined objects, e.g. 120. An example of such server-side software is the "Java Web Server" by Sun Microsystems which permits server-side Java application programming using what are referred to as "servlets." Another more sophisticated example is a distributed network community platform such as "World Matrix," by AT&T Corp. which permits users to create, interact with and share objects on a "nettop." Matrix provides a virtual place for users with controlled access that is secure and persistent.

The user of endpoint 101 creates a new object "on the fly" that is stored on the storage device 117 of the server 110. The object can be any of a number of software constructs. For example, the object can be an interactive object executed on the server, e.g. a game, a form, or a shared search-engine. The object can be an electronic ticket or a certificate and authorization, e.g. to a protected site, or to a credit card number. The object can be a more conventional shared construct such as a shared document (reports, spreadsheets, Microsoft Word documents, Microsoft Powerpoint files), a music recording, or some multi-media data stream (e.g. live video broadcast, ongoing conference phone call, etc.). The object can be to a service gateway, e.g. a "virtual calling card" that can represent a pre-authorized session to an Internet telephony server such as AT&T's "Click-2-Dial". The object can be a servlet that is executed on a server's Java servlet engine and, accordingly, provide all of the functionality and flexibility of Java programming on the server-side. The object can even be persistent, allowing the recipient to access the object after the messaging session with the sender.

After creating the object, an object reference pointing to this object can then be embedded in an outgoing message to terminal 102. The object reference can be identifier or address which can be used to locate the object, such as a URL. In a preferred embodiment of the invention, the application server 110 in combination with any client-side software provides a user interface for terminal 101 that automatically embeds the object reference in the message, e.g. by having the sender merely click on an icon to initiate the process of creating the new object and including the reference to it in the current message. The object reference call also contain authorization information tied to the identity of the recipient making it difficult for the object to be accessed by any unauthorized entity.

The receiver at terminal 102 then receives the message containing the object reference, and, depending on the functionality of the messaging system used, can merely click on the object reference to invoke the relevant application to retrieve the object using the relevant protocols when contacting the application server. For example, where the object reference is a URL, most instant messaging systems allow the user to merely click on the text of the URL which automatically launches a Web browser pointing to the URL address. At this point, the user at terminal 101 can communicate to the user at terminal 102 through the application server 110. Likewise, where the object 120 is persistent, the user of terminal 102 may record the object reference for use at a future date separate and apart from the messaging session.

Variations and modifications to the above-described preferred embodiment will be apparent to one skilled in the art that are within the spirit and scope of the invention as set forth in the claims below.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for operating a real-time messaging system comprising the steps of:
establishing a connection between a first terminal and an application server permitting the first terminal to create an object stored on the application server;
transmitting a message between the first terminal and a second terminal containing an object reference embedded in the message; and
establishing a connection between the second terminal and the application server permitting the second terminal to access the object stored on the application server.

2. The method of claim 1 wherein the object reference contains authorization information.

3. The method of claim 1 wherein the object reference is a Uniform Resource Locator.

4. The method of claim 1 wherein object is a servlet.

5. The method of claim 1 wherein object is a certificate.

6. The method of claim 1 wherein object is a shared document.

7. The method of claim 1 wherein object is a multi-media data stream.

8. The method of claim 1 wherein object is persistent.

9. The method of claim 1 wherein the real-time messaging system is an instant messaging system.

10. An application server for use in a real-time messaging system comprising:
a processor;
a storage device;
means for creating an object stored on the storage device;
means for receiving a request to a create an object from a first terminal;
means for transmitting an object reference to the first terminal; and
means for receiving a request to access the object from a second terminal.

11. The application server of claim 10 wherein the object reference contains authorization information.

12. The application server of claim 10 wherein the object reference is a Uniform Resource Locator.

13. The application server of claim 10 wherein object is a servlet.

14. The application server of claim 10 wherein object is a certificate.

15. The application server of claim 10 wherein object is a shared document.

16. The application server of claim 10 wherein object is a multi-media data stream.

17. The application server of claim 10 wherein object is persistent.

18. The application server of claim 10 wherein the real-time messaging system is an instant messaging system.
